# EUROPÄISCHE PATENTSCHRIFT

(11) **EP 1 781 561 B1**
(45) Veröffentlichungstag und Bekanntmachung des Hinweises auf die Patenterteilung: **09.04.2008**
(21) Anmeldenummer: 06754620.0
(22) Anmeldetag: 29.06.2006
(51) Int. Cl.: B65H 29/26, B65G 47/38

(54) **VERFAHREN UND VORRICHTUNG ZUR ABLAGE EINES FREI BEWEGENDEN FLACHEN GEGENSTANDS**
METHOD AND DEVICE FOR PLACING A FLAT FREELY MOVABLE OBJECT
PROCEDE ET DISPOSITIF POUR POSER UN OBJET PLAT LIBREMENT MOBILE

(30) Priorität: 06.07.2005 DE 102005031492
(43) Veröffentlichungstag der Anmeldung: 09.05.2007
(73) Patentinhaber: SIEMENS AKTIENGESELLSCHAFT, 80333 München (DE)
(72) Erfinder: FRITSCHE, Beat, 8606 Greifensee (CH); ZIMMERMANN, Armin, 78464 Konstanz (DE)
(74) Vertreter: Fischer, Michael
(86) Internationale Anmeldenummer: PCT/EP2006/006303
(87) Internationale Veröffentlichungsnummer: WO 2007/003335

(56) Entgegenhaltungen:
- WO-A-00/26129
- US-A- 3 573 748

## Beschreibung

Die vorliegende Erfindung betrifft ein Verfahren zur Ablage eines frei fallenden, flachen Gegenstands und eine geeignete Ablagevorrichtung nach dem Oberbegriff der Patentansprüche 1 bzw. 6.

Flache Gegenstände, insbesondere Sendungen unterschiedlicher Masse und Oberfläche, sollen einzeln aus Taschen in sich darunter befindliche Behälter, wobei sich Taschen und Behälter mit einer Differenzgeschwindigkeit zueinander bewegen, abgelegt werden. Dabei kann eine Geschwindigkeit auch null sein. Die Gegenstände werden auf eine oder zwei Kanten ausgerichtet abgelegt. Diese Ausrichtung ist Voraussetzung für eine maschinelle Weiterverarbeitung als auch für eine Gangfolgesortierung und die damit verbundene, sich anschließende manuelle Handhabung durch den Briefträger.

Muss ein frei fallender, flacher Gegenstand - meistens wird der Gegenstand in seiner längsten (flachen) Richtung nahe zur Vertikalrichtung aufgrund der Schwerkraft fallen - in ein unteres Ablagefach abgelegt werden, bei welchem eine zur Vertikalrichtung geneigte Wand als flächige Ablage für eine flache Seite des flachen Gegenstandes verwendet wird, treten folgende Probleme auf.

Einerseits kann die zur Fallrichtung vordere (untere und dünnere) Kante der Sendung auf die geneigte Wand auftreffen, so dass der Auftreffwinkel zwischen der flachen Seite der Sendung und der Wand zu hoch ist. Dadurch kann die Sendung beschädigt oder gestaucht werden. Dieser Effekt erhöht sich um sogar mehr, falls das Format oder der Gewicht der Sendung höher ist. Bei mehrseitigen Zeitschriften können auch z.B. einige Seiten besondere Schäden erfahren.

Weiterhin müssen ebenfalls unerwünschte jedoch meistens unvermeidliche Reibungen zwischen der Sendung und der Wand berücksichtigt werden, die zu einer falschen Ausrichtung der Sendung im Ablagefach führen können. Wird das Ablagefach mit der Sendung verstopft, kann es zu dramatischen Situationen für die weiteren kommenden Sendungen führen.

In DE 199 43 362 A1 werden eine Einrichtung und ein Verfahren zum Ordnen von flachen Sendungen dargestellt, welche bei einer Zustellungsabfolge eine Verringerung der Anzahl von Ablagen und Steuerelementen für die Sortierung von Sendungen ermöglichen. Dabei wird ein frei fallender, flacher Gegenstand nahe zur vertikalrichtung aufgrund der Schwerkraft fallen, und in ein unteres Ablagefach abgelegt werden, bei welchem ein zur Vertikalrichtung geneigter Boden als flächige Ablage für eine flache Seite des flachen Gegenstandes verwendet wird.

WO 0026129 A1 zeigt ein Rutschenteil einer Sortiereinrichtung, mit dem abzulegendeflache Gegenstände einen Drehimpuls erhalten.

Der vorliegenden Erfindung liegt daher die Aufgabe zugrunde, eine Übergabe von frei bewegenden flachen Gegenständen in ein unteres geneigtes Ablagefach zu optimieren.

Diese Aufgabe wird durch die in Patentansprüchen 1 und 6 angegebenen Maßnahmen gelöst. Vorteilhafte Ausgestaltungen der Erfindung sind in weiteren Ansprüchen angegeben.

Ausgehend von einem Verfahren zur Ablage eines frei bewegenden, vorzugsweise frei fallenden, flachen Gegenstandes, z.B. aus einem erstem oberen Ablagefach, in ein zweites unteres Ablagefach, dessen eine zur Bewegungsrichtung bzw. Vertikalrichtung geneigte Wand als flächige Ablage für eine flache Seite des flachen Gegenstandes verwendet wird, wird erfindungsgemäss beim Durchgang des zweiten Ablagefaches ein Drehimpuls in den flachen Gegenstand überträgt, derart dass ein Auftreffwinkel zwischen der Wand und der flachen Seite des flachen Gegenstandes minimiert wird.

Dabei kann die Einleitung des Drehimpulses u.a. in einer einfachen mechanischen Weise erfolgen, z.B. mittels eines Umlegers, der einen dezentralen Bereich der flachen Seite einer fallenden Sendung anstosst, so dass die flache Seite eine angemessene Drehung zur Vertikalrichtung erfährt. Andere Mittel können ebenfalls verwendet werden, die mittels der Merkmale der weiter beschriebenen Ablagevorrichtung deutlich angegeben werden.

Vom Vorteil schränkt sich das erfindungsgemässe Verfahren an zu Vertikalrichtung frei fallenden flachen Sendungen nicht ein, aber könnte für Sendungen angewendet werden, deren "Fallrichtung" nicht vertikal (in Sinne der Schwerkraft) ist.

In anderen Worten könnte in die Sendung, die einen ursprünglichen nicht-vertikalen Impuls vor der Ablage auf eine zu dieser Impulsrichtung geneigte Wand aufweist, den bisher erwähnten Drehimpuls zusätzlich eingeleitet werden.

Die Intensität des einzuleitenden Drehimpulses kann einfach in Abhängigkeit von einem Massenträgheitsmoment der flachen Sendung oder deren Kategorie (z.B. nach Klein-, Mittel- oder Grossformat) und von geometrischen Eigenschaften des unteren Ablagefaches eingestellt werden.

Der Zeitpunkt der Einleitung des Drehimpulses sollte allenfalls derart gewählt werden, dass ein abruptes Auftreffen der unteren Kante des freifallenden flachen Gegenstandes auf die geneigte Wand vermieden wird. Ein weiteres zeitliches Kriterium zur Einleitung des Drehimpulses kann auch verwendet werden, indem die erste (untere) Hälfte der flachen Seite der Sendung in das zweite Ablagefach bereits eingetreten ist.

Meistens werden die Sendungen aus oberen Kassetten, die an einer Laufbahn angehängt sind, freigelassen. D. h. die Sendungen können zusätzlich zu ihrer vertikalen Fallrichtung eine horizontale Bewegungskomponente bzw. einen Drehimpuls aufgrund z.B. eines Stoßes des oberen Bereiches der Sendung an der Anlassöffnung der umlaufenden Kassette aufweisen. Daher ermöglicht die Erfindung eine effektive Korrektur der ursprünglichen Bewegungseigenschaften der fallenden Sendung bei dem weiteren Durchgang in ein unteres z.B. festes Ablagefach mit einer geneigten Wand.

Die Erfindung wird nachfolgend anhand der Zeichnung beispielsweise näher erläutert. Dabei zeigen:
- Figur 1:: Hauptverfahrensschritte der erfindungsgemässen Ablage einer Sendung in einen geneigten Behälter,
- Figur 2:: Ablage von Sendungen unterschiedlicher Formate.

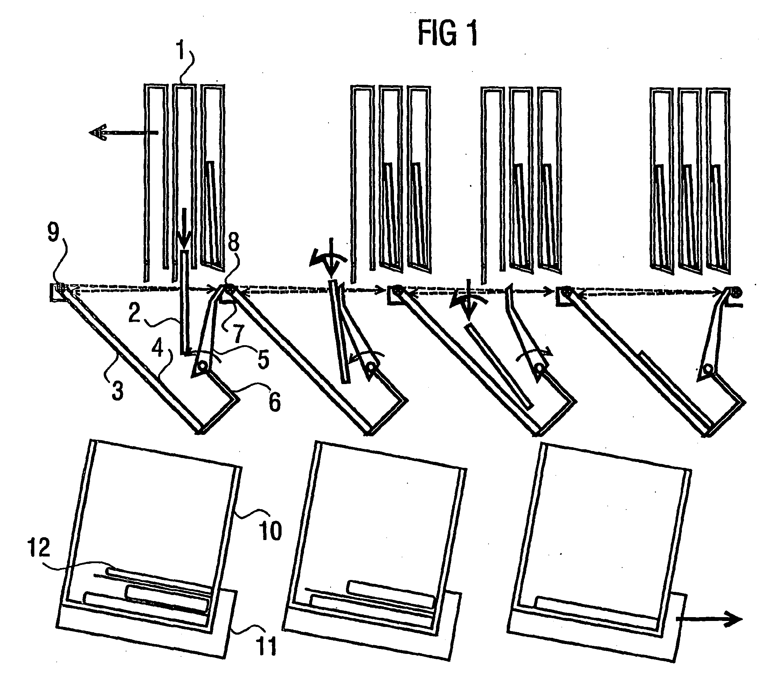

Figur 1 zeigt vier zeitlich nacheinanderfolgende Verfahrenschritte (von links bis rechts) einer hier frei fallenden flachen Sendung 2 in ein unteres Ablagefach 5, dessen eine zur Vertikalrichtung geneigte Wand 4 als flächige Ziel-Ablage für eine flache Seite der Sendung 2 verwendet wird.

Beispielsweise fällt die flache Sendung 2 aus einer zu der flachen Seite vertikal gerichteten oberen Kassette 1 runter, die Teil einer - hier in linker Richtung bewegenden - Laufbahn mit mehreren nebengeordneten gleichen Kassetten ist. Der Zeitpunkt einer unteren Auslassöffnung der Kassette 1 kann meistens mittels einer Vorgabe an die Kassette 1 der Laufbahn übermittelt werden. Weitere Kontrollmitteln wie optische Prüfsignale können der Zeitpunkt dieser Vorgabe genauer steuern, so dass die Kassette 1 in einem bestimmten Zeitintervall bzw. über dem Einlassbereich des unteren Ablagefaches 3 geöffnet wird. Dabei kann auch das untere Ablagefach 3 Teil einer der ersten Laufbahn zweiten unteren Laufbahn sein.

Eine Klappe 6 im unteren Bereich des Ablagefaches 3 wird als Ausrichtungsmittel einer unteren - dünnen - Kante der Sendung 2 bzw. als Schließmittel des Ablagefaches 3 verwendet. Wird die Klappe 6 geöffnet, fällt die Sendung weiter herunter, z.B. in einen dritten Behälter 10, der ebenfalls an einer - hier in rechter Horizontalrichtung bewegenden - dritten Laufbahn über ein Schlitten 11 befestigt sein kann. Damit werden Stapel 12 von Sendungen, die in nun "mittleren" Ablagefächern 3 abgelegt wurden, selektiv in einem der dritten Behälter 10 gebildet werden. Dabei werden die Kante und die flache Seite der Sendungen an dem Boden und ders seitlichen Wand des dritten Behälters 10 ausgerichtet. Eine korrekte Ausrichtung des Stapels 12 kann weiterhin über besondere Positionierung/Bewegungen des umlaufenden Schlittens zu Vertikal- bzw. Horizontalrichtungen erreicht werden.

Nun zur Vorrichtungsaspekt der Erfindung bewirkt beim Durchgang der flachen Sendung 2 in das untere Ablagefach ein Mittel 5 - hier ein Dreharm - einen Drehimpuls auf der flachen Kante der flachen Sendung 2, derart dass ein Auftreffwinkel zwischen der geneigten Wand 4 und der flachen Seite der Sendung 2 minimiert wird. Der Dreharm oder Umleger 5 weist eine Drehachse auf, die parallel zu der geneigten Wand 4 und möglichst zu der flachen Seite ist. Zur Vereinfachung der Vorrichtung ist in Figur 1 die Drehachse des Umlegers 5 über die gleiche Achse der Klappe 6 gebaut. Der obere seitliche Teil des drehbaren Umlegers 5 kann eine gekrümmte oder abgeknickte Kontaktfläche aufweisen, über welche der Stoß gegen die Sendung 2 erfolgt. Die Krümmung oder der Knick ermöglicht eine bessere Druckverteilung bei dem Stoß, so dass die Sendung nicht beschädigt wird. Ebenfalls wird dadurch eine über einem Bereich der Sendung effektiver verteilte Übertragung des Drehimpulses gewährleistet. Es können weiterhin auch mehrere nebengeordnete Dreharme auf einer Drehachse montiert werden, mit welchen unterschiedliche Intensitäten von Drehimpulsen eingeleitet werden können.

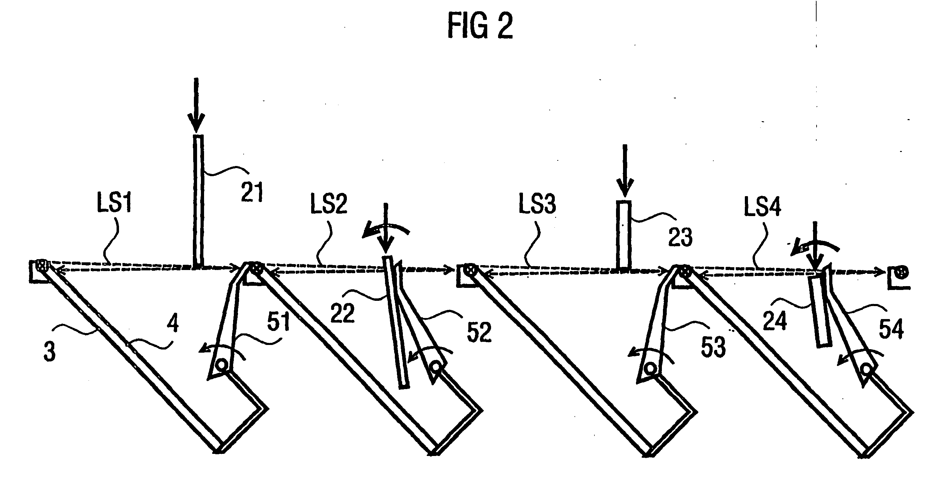

Die erste linke Darstellung mit der Sendung 2 in Figur 2 zeigt die Abgabe der Sendung aus der Kassette 1 zu dem unteren Ablagefach 3 sowie den nachfolgenden Durchgang in das untere Ablagefach 3. Dabei ist der Dreharm 5 fern von der Sendung gehalten. Ein Lichtschrank mit einer Lichtquelle 9 und einem Empfänger 8 (oder einem Spiegel 8 zur Rückführung des Lichtes an die Lichtquelle 9, die in diesem Fall einen Empfänger aufweist) erzeugt einen Lichtstrahl im oberen Eingangbereich des Ablagefaches 3. Damit ist bekannt gemacht, dass die Sendung 2 das Ablagefach 3 eintritt. Vor allem stoßt der Umleger 5 (siehe die von links zweite Darstellung der Sendung 2) vor dem Auftreffen der zur Fallrichtung unteren Kante der Sendung 2 auf die geneigte Wand 4 im Bereich der oberen Hälfte der flachen Seite der Sendung 2 an. Damit wird der Drehimpuls an die Sendung 2 eingeleitet, so dass sich die flache Seite der Sendung 2 über die Drehachse neigt und sich an die geneigte Wand 4 annähert, ohne dass eine abrupte Landung zwischen diesen Beiden stattfindet (siehe die von links dritte Darstellung der Sendung 2). In der von rechts letzten Darstellung ist die Endstellung der Sendung 2 auf der geneigten Wand 4 gezeigt, die ebenfalls die Auftrefflage der Sendung 2 auf die geneigte Wand 4 sein sollte.

Figur 1 stellt als Mittel zur Einleitung des Drehimpulses an die Sendung 2 einen Dreharm 5 mit einer Kontaktfläche dar. Jedoch sind viele andere Mittel vorstellbar:
- die Kontaktfläche könnte ein Teil eines schiebbaren Stosselements anstelle des Dreharms sein, der bei dem Ausführungsbeispiel gemäss Figur 1 und nach Durchgang des unteren Hälfte der Sendung einen Teil der oberen Hälfte der flachen Sendung 2 lateral horizontal stoßen würde. Optional könnte auch die Kontaktfläche als Zylindermantel einer Reife sein, die mittels einer mit der flachen Seite der Sendung 2 reibungsbedingte Drehung die Richtung des Falls der Sendung 2 ändert und an der geneigten Wand 4 anpasst. Die Reife könnte ebenfalls auf dem Dreharm oder auf dem schiebbaren Element mittels einer dortigen Drehachse montiert und als rotierende Kontaktfläche verwendet werden.
- ein berührungsloser Anzieher und/oder ein berührungsloser Abstosser könnten ebenfalls anstelle des Dreharms 5 verwendet werden. Dabei könnten der Anzieher und der Abstosser eine Saugvorrichtung bzw. eine Gebläse sein. Z.B. könnte die Gebläse einen Luftstrom vom oberen zum unteren Bereich des unteren Ablagefaches erzeugen. Ein Luftstrom entlang und nah an der flachen geneigten Wand 4 könnte ebenfalls als Drehmittel verwendet werden, jedoch würde die Sendung dann nur auf der Wand 4 liegen, als dieser Luftstrom ausgeschaltet wird, was aus Schnelligkeitsgründen im Gegensatz zu mechanischen Kontaktmitteln nicht optimal ist.
- eine Alternative könnte durch eine Verwendung, als Anzieher und Abstosser, von elektrostatisch geladenen Elementen realisiert werden. Die Flache geneigte Wand 4 und eine zum Ablagefach 3 gegenüberliegende liegende Stelle könnten an positiv bzw. negativ geladenen Spannungen angeschlossen werden. Damit könnten z.B. flache Papier- oder Kunststoffsendungen z.B. durch einen Anzug zu positiven Ladungen in Richtung der geneigten Teile (d.h. der Wand 4) des Ablagefaches 3 ausgerichtet werden. Jedoch könnte ein weiterer Durchlass aus dem Ablagefach 3 zu einem unteren Behälter 10 problematisch sein, da bei Öffnung der Klappe 6 und bei restlichen elektrostatischen Ladungen im Ablagefach 3 ein Gleiten der Sendung 2 nach unten verhindert sein könnte. Die dabei zu erzeugenden An- bzw. Abziehungskräfte hängen ebenfalls von den Eigenschaften (Stoff, Format, Gewicht) der Sendungen ab, darum bleibt diese Lösung aufwendiger zu realisieren als die Vorigen.

**Figur 2** zeigt zwei Einleitungen von Drehimpulsen bei der Ablage von Sendungen unterschiedlicher Formate. Beide links dargestellte Sendungen 21, 22 sind gleich und weisen eine längliche flache Seite auf. Beide rechts dargestellte Sendungen 23, 24 sind ebenfalls gleich und weisen eine kürzere flache Seite (sowie eine breitere Dicke an der unteren Kante) als die beiden ersten Sendungen 21, 22 auf. In beiden Fällen wird mindestens der Durchgang einer Sendung in den oberen Bereich des Ablagefaches 3 mit einem Lichtschrank LS1, LS2, LS3, LS4 überwacht.

Vor dem Durchgang der ersten länglichen Sendung 21 über den ersten Lichtschrank LS1 bleibt der Dreharm 51 in einer Rückhaltungsposition, derart dass der obere Eingang des Ablagefaches 3 trichterförmig zum umfangreicheren Empfang der Sendung gebildet wird.

Aufgrund ihrer langen Seite und damit kein abruptes oder reibungsvolles Auftreffen der Sendung auf die geneigte Wand 4 stattfindet, muss die erste Sendung 21 vor ihrem kompletten Durchgang über den Lichtschrank LS1 geneigt werden. Diese Situation ist für die zweite längliche Sendung 22 dargestellt, deren oberer Teil noch im Lichtschrank LS2 steht, als der Dreharm 52 in Position zur Einleitung des Drehimpulses die Sendung 22 stoßt. Als Kriterium zur "vorsorglichen" Aktivierung des Dreharms 51, 52 werden die Maßen des Ablagefaches 3 in Verbindung mit den typischen maximalen Längen von flachen Sendungen berücksichtigt. Bleibt der Lichtschrank LS1, LS2 eine Grenzdauer ausgeblendet, ist eine längliche Sendung erkannt sowie die Einleitung des Drehimpulses früh genug vor dem Auftreffen aktiviert. Dabei stoßt der Dreharm 51, 52 in der oberen Hälfte der flachen Seite der Sendungen 21, 22 an.

Zusätzlich zu dem einzeln dargestellten Lichtschank könnten auch weitere Lichtschränke, z.B. im Bereich zwischen der Kassette 1 und des Eingangs des unteren Ablagefaches 3, verwendet werden. Dies ist aufwendiger, aber liefert eine genauere Information über die Lage und das Format der frei fallenden Sendungen. Sendungsformate können allerdings in einem Vorverfahren ermittelt werden und stehen bei der Übergabe zur Verfügung. Dabei können die Lichtschränken als Trigger verwendet werden und entsprechend bekannter Sendungsparameter wird der Zeitpunkt zur Einleitung des Drehimpulses bestimmt, der in einer Testphase empirisch optimiert wurde.

Die weiteren rechten Darstellungen für beide Sendungen 23, 24 mit kürzeren flachen Seiten zeigen, wie in beiden ersten linken Darstellungen, den Durchgang des unteren Teils der Sendung 23 über den Lichtschrank LS3 und den nachfolgenden Ausgang des oberen Teils der gleichen Sendung 24. Dabei ist die flache Seite der Sendung 23, 24 klein genug, so dass das aus- und wieder eingeschaltete optische Signal des Lichtschranks LS3, LS4 ohne Risiko vor einem Auftreffen auf die geneigte Wand 4 und ohne Vorgabe einer Grenzdauer die Aktivierung des Dreharms steuern. Der Drehimpuls wird daher in einer automonen Weise getriggert und an die Sendung überträgt.

## Patentansprüche

1. Verfahren zur Ablage eines in ein unteres Ablagefach (5) frei fallenden, flachen Gegenstandes (2), demgemäss eine zur Vertikalrichtung geneigte Wand (4) des Ablagefaches (5) als flächige Ablage für eine flache Seite des flachen Gegenstandes verwendet wird,
**dadurch gekennzeichnet, dass**
beim Durchgang des flachen Gegenstandes in das untere Ablagefach (5) ein Drehimpuls in den flachen Gegenstand (2) eingeleitet wird, derart dass ein Auftreffwinkel zwischen der Wand (4) und der flachen Seite des flachen Gegenstandes (2) minimiert wird.

2. Verfahren nach Anspruch 1,
**dadurch gekennzeichnet, dass**
die Intensität des Drehimpulses in Abhängigkeit von einem Massenträgheitsmoment des flachen Gegenstands und von geometrischen Eigenschaften des unteren Ablagefaches eingestellt wird.

3. Verfahren nach Anspruch 1 oder 2,
**dadurch gekennzeichnet, dass**
der Zeitpunkt der Einleitung des Drehimpulses derart gewählt wird, bevor eine untere Kante des frei fallenden flachen Gegenstandes die geneigte Wand auftrifft.

4. Verfahren nach einem der vorgehenden Ansprüche,
**dadurch gekennzeichnet, dass**
die Einleitung des Drehimpulses mittels optischer Kontrollsignale gesteuert wird.

5. Verfahren nach einem der vorgehenden Ansprüche,
**dadurch gekennzeichnet, dass**
der Gegenstand aus einer zu der flachen Seite vertikal gerichteten oberen Kassette (1) runter fällt, die Teil einer Laufbahn ist,
das untere Ablagefach (3) Teil einer der ersten Laufbahn zweiten unteren Laufbahn ist,
die Sendung fällt weiter herunter, z.B. in einen dritten Behälter (10), der ebenfalls an einer dritten Laufbahn befestigt sein kann.

6. Ablagevorrichtung eines in ein unteres Ablagefach (3) frei fallenden, flachen Gegenstandes (2), wobei das untere Ablagefach (3) eine zur Vertikalrichtung geneigte Wand (4) als flächige Ablage für eine flache Seite des flachen Gegenstandes (2) aufweist,
**dadurch gekennzeichnet, dass**
beim Durchgang des flachen Gegenstands (2) in das untere Ablagefach (3) ein Mittel (5) einen Drehimpuls auf einer flachen Seite des flachen Gegenstandes (2) bewirkt, derart dass ein Auftreffwinkel zwischen der geneigten Wand (4) und der flachen Seite des flachen Gegenstandes (2) minimiert wird.

7. Ablagevorrichtung nach Anspruch 6,
**dadurch gekennzeichnet, dass**
das Mittel (5) eine Kontaktfläche aufweist, die vor Auftreffe des flachen Gegenstands mit der Wand im Bereich der oberen Hälfte der flachen Seite des flachen Gegenstands stoßt.

8. Ablagevorrichtung nach Anspruch 7,
**dadurch gekennzeichnet, dass**
die Kontaktfläche ein Teil eines drehbaren Arms ist.

9. Ablagevorrichtung nach Anspruch 7,
**dadurch gekennzeichnet, dass**
die Kontaktfläche ein Teil eines schiebbaren Stosselements ist.

10. Ablagevorrichtung nach Anspruch 6,
**dadurch gekennzeichnet, dass**
das Mittel (5) ein berührungsloses Anzieher und/oder ein Abstosser ist.

11. Ablagevorrichtung nach Anspruch 10,
**dadurch gekennzeichnet, dass**
der Anzieher und der Abstosser eine Saugvorrichtung bzw. eine Gebläse ist.

12. Ablagevorrichtung nach Anspruch 11,
**dadurch gekennzeichnet, dass**
die Gebläse einen Luftstrom vom oberen zum unteren Bereich des unteren Ablagefaches erzeugt.

13. Ablagevorrichtung nach Anspruch 10,
**dadurch gekennzeichnet, dass**
der Anzieher und der Abstosser elektrostatisch geladene Elemente sind.

14. Ablagevorrichtung nach einem der vorhergehenden Ansprüche 6 bis 12,
**dadurch gekennzeichnet, dass**
der Durchgang im oberen Bereich des Ablagefaches eine oder mehrere Lichtschränke (8, 9) aufweist.

15. Ablagevorrichtung nach einem der vorhergehenden Ansprüche 6 bis 12,
**dadurch gekennzeichnet, dass**
der Durchgang im oberen Bereich des Ablagefaches trichterförmig gebildet ist.

## Claims

1. A method for depositing a flat object (2) dropping freely into a lower compartment (5), according to which a wall (4) of the compartment (5) at an angle in relation to the vertical is used as a flat deposit point for a flat side of the flat object,
**characterized in that**
during passage of the flat object into the lower compartment (5), an angular momentum is imparted to the flat object (2), such that an angle of incidence between the wall (4) and the flat side of the flat object (2) is minimized.

2. The method as claimed in claim 1,
**characterised in that** the intensity of the angular momentum is adjusted as a function of a moment of inertia of the flat object and geometric characteristics of the lower compartment.

3. The method as claimed in claim 1 or 2,
**characterised in that** the time of imparting the angular momentum is selected such, before a lower edge of the freely dropping, flat object strikes the angled wall.

4. The method as claimed in one of the preceding claims,
**characterised in that** the imparting of the angular momentum is controlled by means of optical control signals.

5. The method as claimed in one of the preceding claims,
**characterised in that**
the object drops down from an upper cassette (1) aligned vertically in relation to the flat side, said cassette (1) being part of a moving belt,
the lower compartment (3) is part of a second moving belt below the first moving belt,
the mail item drops further down, for example into a third container (10), which can similarly be attached to a third moving belt.

6. A depositing device for a flat object (2) dropping freely into a lower compartment (3), the lower compartment (3) having a wall (4) that is at an angle in relation to the vertical as the flat deposit point for a flat side of the flat object (2),
**characterised in that**
during passage of the flat object (2) into the lower compartment (3) a means (5) produces an angular momentum on a flat side of the flat object (2), such that an angle of incidence between the angled wall (4) and the flat side of the flat object (2) is minimized.

7. The depositing device as claimed in claim 6,
**characterised in that**
the means (5) has a contact surface, which nudges the region of the upper half of the flat side of the flat object, before the flat object strikes the wall.

8. The depositing device as claimed in claim 7,
**characterised in that**
the contact surface is part of a rotatable arm.

9. The depositing device as claimed in claim 7,
**characterised in that**
the contact surface is part of a movable nudging element.

10. The depositing device as claimed in claim 6,
**characterised in that**
the means (5) is a contactless attractor and/or repeller.

11. The depositing device as claimed in claim 10,
**characterised in that**
the attractor and repeller are a suction device and a fan.

12. The depositing device as claimed in claim 11,
**characterised in that**
the fan generates a flow of air from the upper region to the lower region of the lower compartment.

13. The depositing device as claimed in claim 10,
**characterised in that**
the attractor and repeller are electrostatically charged elements.

14. The depositing device as claimed in one of the preceding claims 6 to 12,
**characterised in that**
the passage in the upper region of the compartment has one or more light barriers (8, 9).

15. The depositing device as claimed in one of the preceding claims 6 to 12,
**characterised in that**
the passage in the upper region of the compartment is funnel-shaped.

## Revendications

1. Procédé pour déposer un objet plat (2) qui tombe librement dans un casier inférieur de dépôt (5), d'après lequel une paroi (4), inclinée par rapport à la verticale, du casier de dépôt (5) sert à déposer à plat un côté plat de l'objet plat,
**caractérisé en ce que**, quand l'objet plat passe dans le casier inférieur de dépôt (5), un moment angulaire est appliqué à l'objet plat (2) de manière à minimiser un angle d'incidence entre la paroi (4) et le côté plat de l'objet plat (2).

2. Procédé selon la revendication 1, **caractérisé en ce que** l'intensité du moment angulaire est réglée en fonction d'un moment d'inertie de l'objet plat et en fonction des propriétés géométriques du casier inférieur de dépôt.

3. Procédé selon la revendication 2, **caractérisé en ce que** l'instant où est appliqué le moment angulaire est choisi de telle manière qu'il précède le moment où un bord inférieur de l'objet plat qui tombe librement atteint la paroi inclinée.

4. Procédé selon l'une des revendications précédentes, **caractérisé en ce que** l'application du moment angulaire est réglée à l'aide de signaux optiques de contrôle.

5. Procédé selon l'une des revendications précédentes, **caractérisé en ce que**
l'objet tombe d'une cassette (1) supérieure qui est orientée à la verticale par rapport au côté plat et fait partie d'une glissière,
le casier inférieur de dépôt (3) fait partie d'une deuxième glissière au-dessous de la première glissière,
l'envoi continue de tomber, par exemple dans un troisième récipient (10), qui peut être également fixé à une troisième glissière.

6. Dispositif de dépôt d'un objet plat (2) qui tombe librement dans un casier inférieur de dépôt (3), lequel casier inférieur de dépôt (3) comporte une paroi inclinée (4) par rapport à la verticale pour déposer à plat un côté plat de l'objet plat (2),
**caractérisé en ce que**, quand l'objet plat (2) passe dans le casier inférieur de dépôt (3), un moyen (5) applique un moment angulaire à un côté plat de l'objet plat (2) de manière à minimiser un angle d'incidence entre la paroi inclinée (4) et le côté plat de l'objet plat (2).

7. Dispositif de dépôt selon la revendication 6, **caractérisé en ce que** le moyen (5) comporte une surface de contact qui, avant que l'objet plat n'atteigne la paroi, exerce une poussée dans la zone de la moitié supérieure du côté plat de l'objet plat.

8. Dispositif de dépôt selon la revendication 7, **caractérisé en ce que** la surface de contact fait partie d'un bras rotatif.

9. Dispositif de dépôt selon la revendication 7, **caractérisé en ce que** la surface de contact fait partie d'un élément de poussée coulissant.

10. Dispositif de dépôt selon la revendication 6, **caractérisé en ce que** le moyen (5) est un organe d'attraction et/ou un organe de répulsion sans contact.

11. Dispositif de dépôt selon la revendication 10, **caractérisé en ce que** l'organe d'attraction et l'organe de répulsion sont un dispositif d'aspiration ou une soufflerie.

12. Dispositif de dépôt selon la revendication 11, **caractérisé en ce que** la soufflerie produit un courant d'air de la zone supérieure vers la zone inférieure du casier inférieur de dépôt.

13. Dispositif de dépôt selon la revendication 10, **caractérisé en ce que** l'organe d'attraction et l'organe de répulsion sont des éléments qui ont une charge électrostatique.

14. Dispositif de dépôt selon l'une des revendications précédentes 6 à 12, **caractérisé en ce que** le passage dans la zone supérieure du casier de dépôt comporte une ou plusieurs barrières photoélectriques (8, 9).

15. Dispositif de dépôt selon l'une des revendications précédentes 6 à 12, **caractérisé en ce que** le passage dans la zone supérieure du casier de dépôt a une forme d'entonnoir.
